# EUROPEAN PATENT SPECIFICATION

(11) **EP 3 450 232 B1**
(45) Date of publication and mention of the grant of the patent: **02.12.2020**
(21) Application number: 18191718.8
(22) Date of filing: 30.08.2018
(51) Int. Cl.: B60J 1/14

(54) **PIVOTABLE WINDOW OF ULTRA-LIGHTWEIGHT VEHICLE**
KLAPPFENSTER EINES ULTRALEICHTEN FAHRZEUGS
VITRE PIVOTANTE DE VÉHICULE ULTRA-LÉGER

(30) Priority: 30.08.2017 JP 2017165074
(43) Date of publication of application: 06.03.2019
(73) Proprietor: TOYOTA JIDOSHA KABUSHIKI KAISHA, Toyota-shi, Aichi-ken, 471-8571 (JP)
(72) Inventor: KATO, Hideyuki, TOYOTA-SHI, AICHI-KEN, 471-8571 (JP)
(74) Representative: Cabinet Beau de Loménie

(56) References cited:
- FR-A1- 2 926 494
- JP-A- H02 197 679
- JP-A- S60 248 435
- US-A- 2 066 432

## Description

### BACKGROUND

### Field

The invention relates to an outside air introduction system of an ultra-lightweight vehicle.

### Description of the related art

In recent years, a vehicle called as an ultra-lightweight vehicle having a riding capacity of one person or two persons, has been developed. The ultra-lightweight vehicle has a generally closed interior space. For the purpose of reducing a weight of the ultra-lightweight vehicle, the ultra-lightweight vehicle may not have an electric air conditioning apparatus such as an air conditioner nor a system for introducing an air from an outside of the ultra-lightweight vehicle to the interior space of the ultra-lightweight vehicle.

In the ultra-lightweight vehicle, during the summer, a driver of the vehicle may not lower a temperature of the interior space of the ultra-lightweight vehicle even when the temperature of the interior space increases to a temperature at which the driver feels discomfort. During the winter, the driver may not prevent windowpanes including a windshield from clouding due to a difference in temperature between the interior space and the outside air. In addition, when the windowpanes cloud, the driver may not remove cloud of the windowpanes.

The ultra-lightweight vehicle having the generally closed interior space is desirably configured to introduce the outside air into the interior space for lowing the temperature of the interior space, preventing the windowpanes from clouding, and removing the cloud of the windowpanes.

A system for introducing the outside air into an interior space of the conventional vehicle through an outside air introduction opening provided in a bonnet or hood of the vehicle, is known (for example, see JP Utility Model Publication No. 63-104211; see also FR 2 926 494).

The ultra-lightweight vehicle may not have a portion such as the bonnet or the hood of the conventional vehicle. Therefore, the ultra-lightweight vehicle may have a limited portion in which the outside air introduction system described above is provided. Therefore, the outside air introduction system of the conventional vehicle having the bonnet or the hood may not be provided in the ultra-lightweight vehicle.

### SUMMARY

The invention solves above-mentioned problems. An object of the invention is to provide the outside air introduction system of the ultra-lightweight vehicle for introducing the outside air into the interior space of the ultra-lightweight vehicle.

An outside air introduction system according to the invention is recited in appended claim 1. It is a system for introducing an outside air into a generally closed interior space of an ultra-lightweight vehicle. The ultra-lightweight vehicle has a body provided with at least one window frame and at least one window glass fitted in the at least one window frame. The body and the at least one window glass define the generally closed interior space.

The outside air introduction system according to the invention comprises at least one body support mechanism for supporting the at least one window glass pivotably on the body.

The at least one window glass of the outside air introduction system according to the invention may be pivoted to open. Thereby, the outside air may be introduced into the interior space of the ultra-lightweight vehicle through a gap formed between the body and the at least one window glass when the at least one window glass opens. Therefore, even when the ultra-lightweight vehicle has a limited portion in which the outside air introduction system of the conventional vehicle is provided, the outside air introduction system according to the invention may be provided in the ultra-lightweight vehicle. As a result, the outside air may be introduced into the interior space of the ultra-lightweight vehicle.

According to an aspect of the invention, the at least one support mechanism may support the at least one window glass on the body at a lower portion of the at least one window glass.

According to the invention, the outside air introduction system further comprises at least one window glass open/close mechanism which is provided to be operated by a driver of the ultra-lightweight vehicle to pivot the at least one window glass to open and close the at least one window glass. In this aspect, the driver may open the at least one window glass. Therefore, it is convenient for the driver.

According to the invention, the at least one window glass open/close mechanism includes at least one holding mechanism for holding the at least one window glass at a closed position in which the at least one window glass is closed. In this aspect, the at least one window glass is prevented from opening unintentionally.

According to the invention, the at least one holding mechanism includes at least one operation lever operated by the driver operating upwardly to hold the at least one window glass at the closed position and downwardly to release the at least one window glass.

According to further another aspect of the invention, the at least one support mechanism may support the at least one window glass pivotably on the body to pivot the at least one window glass outwardly of the body.

According to further another aspect of the invention, the at least one window frame may be provided on a left or right side portion of the body.

According to further another aspect of the invention, the at least one window frame may include a left window frame provided on a left side portion of the body and a right window frame provided on a right side portion of the body. According to this aspect, the at least one window glass may include a left window glass fitted to the left window frame and a right window glass fitted to the right window frame. Further, according to this aspect, the at least one support mechanism may include a left support mechanism for supporting the left window glass pivotably on the body and a right support mechanism for supporting the right window glass pivotably on the body.

According to further another aspect of the invention, the left support mechanism may support the left window glass on the body at a lower portion of the left window glass. According to this aspect, the right support mechanism may support the right window glass on the body at a lower portion of the right window glass.

According to further another aspect of the invention, the outside air introduction system may further comprise a left window glass open/close mechanism which is provided to be operated by a driver of the ultra-lightweight vehicle to pivot the left window glass to open and close the left window glass and a right window glass open/close mechanism which is provided to be operated by the driver of the ultra-lightweight vehicle to pivot the right window glass to open and close the right window glass.

According to further another aspect of the invention, the left window glass open/close mechanism may include a left holding mechanism for holding the left window glass at a closed position in which the left window glass is closed, and a right holding mechanism for holding the right window glass at a closed position in which the right window glass is closed.

According to further another aspect of the invention, the left holding mechanism may include a left operation lever operated by the driver operating upwardly to hold the left window glass at the closed position and downwardly to release the left window glass. According to this aspect, the right holding mechanism may include a right operation lever operated by the driver operating upwardly to hold the right window glass at the closed position and downwardly to release the right window glass.

According to further another aspect of the invention, the left support mechanism may support the left window glass pivotably on the body to pivot the left window glass outwardly of the body. According to this aspect, the right support mechanism may support the right window glass pivotably on the body to pivot the right window glass outwardly of the body.

In the above description, for facilitating understanding of the present invention, elements of the present invention corresponding to elements of an embodiment described later are denoted by reference symbols used in the description of the embodiment accompanied with parentheses. However, the elements of the present invention are not limited to the elements of the embodiment defined by the reference symbols. The other objects, features and accompanied advantages of the present invention can be easily understood from the description of the embodiment of the present invention along with the drawings.

### BRIEF DESCRIPTION OF THE DRAWINGS

FIG. 1 is a perspective view showing an ultra-lightweight vehicle to which an air introduction system according to an embodiment of the invention is applied.
FIG. 2 is a side view showing the ultra-lightweight vehicle shown in FIG. 1.
FIG. 3 is a front view showing the ultra-lightweight vehicle shown in FIG. 1.
FIG. 4 is a view showing an electronic control unit, etc. of the ultra-lightweight vehicle shown in FIG. 1.
FIG. 5A is a view showing a support mechanism, etc. of a right air introduction system of the ultra-lightweight vehicle shown in FIG. 1.
FIG. 5B is a view showing a support mechanism, etc. of a left air introduction system of the ultra-lightweight vehicle shown in FIG. 1.
FIG. 6A is a view showing the support mechanism, etc. of the right outside air introduction system of the ultra-lightweight vehicle shown in FIG. 1.
FIG. 6B is a view showing the support mechanism, etc. of the left outside air introduction system of the ultra-lightweight vehicle shown in FIG. 1.

### DESCRIPTION OF THE PREFERRED EMBODIMENTS

### <Configuration>

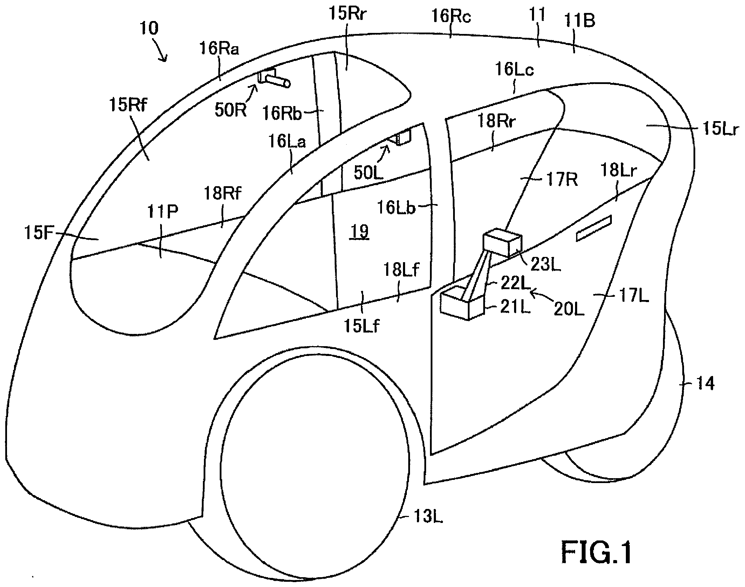

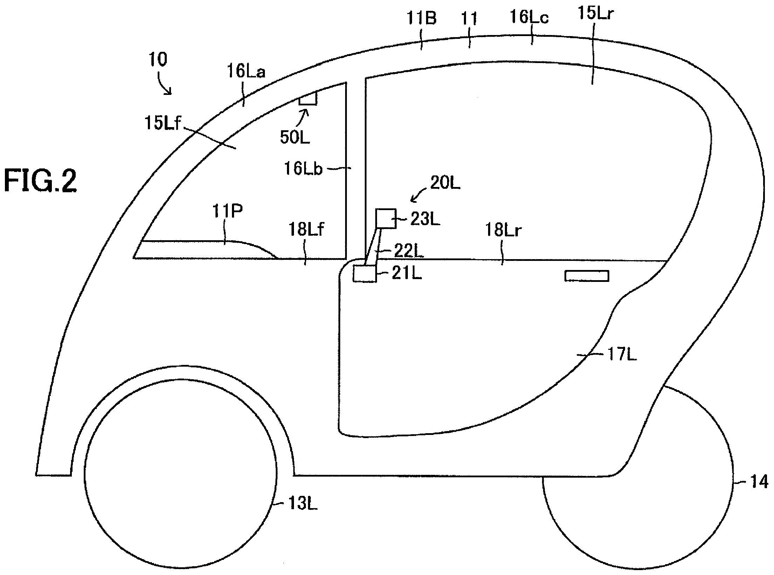

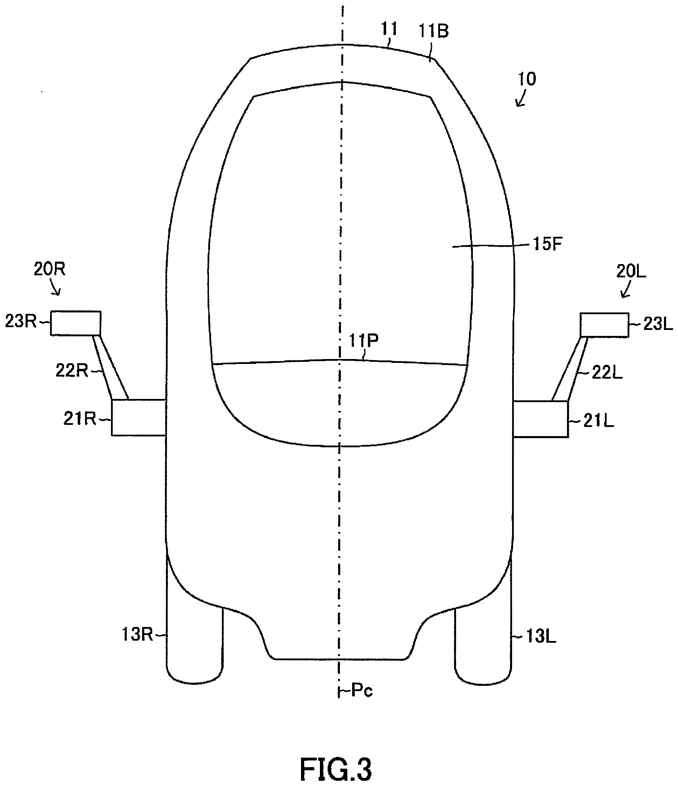

An outside air introduction system of an ultra-lightweight vehicle according to an embodiment of the invention will be described with reference to the drawings. The outside air introduction system according to the embodiment of the invention is a system for introducing an outside air into an interior space of the ultra-lightweight vehicle and is applied to an ultra-lightweight vehicle 10 shown in FIGs. 1 to 3 Hereinafter, the outside air introduction system according to the embodiment will be referred to as "the embodiment system".

The ultra-lightweight vehicle 10 of this embodiment does not have an electric air conditioning apparatus such as an air conditioner capable of ventilating, cooling, or heating the interior space 19 of the ultra-lightweight vehicle 10. The embodiment system may be applied to the ultra-lightweight vehicle having the electric air conditioning apparatus.

The ultra-lightweight vehicle 10 of this embodiment is a small-size vehicle having a capacity of two persons. The embodiment system may be applied to the ultra-lightweight vehicle having a capacity of one person or three persons. Therefore, the embodiment system may be applied to the ultra-lightweight vehicle having a capacity of three or less persons.

The ultra-lightweight vehicle 10 includes a body 11, a left side mirror member or wing mirror member 20L, a right side mirror member or wing mirror member 20R, a left front wheel 13L, a right front wheel 13R, and a rear wheel 14. The embodiment system may be applied to the ultra-lightweight vehicle including three or more wheels.

The body 11 includes a main body 11B and an instrument panel 11P. The body 11 further includes a front window glass or front glass 15F, a left A pillar 16La, a left B pillar 16Lb, a left C pillar 16Lc, a left door 17L, a left front window glass 15Lf, a right A pillar 16Ra, a right B pillar 16Rb, a right C pillar 16Rc, a right door 17R, and a right front window glass 15Rf.

The left A pillar 16La extends curving upwardly and longitudinally from a front side of the body 11 to a rear side of the body 11. The right A pillar 16Ra extends curving upwardly and longitudinally from the front side of the body 11 to the rear side of the body 11. The left B pillar 16Lb extends generally vertically. The right B pillar 16Rb extends generally vertically.

The left front window glass 15Lf is fitted in a left front window frame 18Lf formed by the left A pillar 16La, the left B pillar 16Lb, and the main body 11B. As described later, the left front window glass 15Lf is movably fitted in the left front window frame 18Lf. A portion of the main body 11B forming the left front window frame 18Lf is a portion of the main body 11B extending generally straight longitudinally. The left door 17L includes a window frame 18Lr at an upper area of the left door 17L. A window glass 15Lr is fitted in the window frame 18Lr.

The right front window glass 15Rf is fitted in a right front window frame 18Rf formed by the right A pillar 16Ra, the right B pillar 16Rb, and the main body 11B. As described later, the right front window glass 15Rf is movably fitted in the right front window frame 18Rf. A portion of the main body 11B forming the right front window frame 18Rf is a portion of the main body 11B extending generally straight longitudinally. The right door 17R includes a window frame 18Rr at an upper area of the right door 17R. A window glass 15Rr is fitted in the window frame 18Rr.

The body 11 defines an interior space 19. The interior space 19 is generally closed when the left and right doors 17L and 17R are closed. The body 11 includes an outer wall surface having a streamline shape with an apex portion corresponding to a front center portion of the outer wall surface in a width direction of the body 11.

The instrument panel 11P is mounted to the main body 11B at a front area of the interior space 19.

The left side mirror member 20L includes a stay portion 21L, a stem portion 22L, and a head portion 23L. The stay portion 21L is secured to a front portion of the left door 17L. The stem portion 22L is an elongated rod member. A lower end of the stem portion 22L is secured to an upper wall surface of the stay portion 21L such that the stem portion 22L extends diagonally leftward, upwardly and outwardly from the upper wall surface of the stay portion 21L. The head portion 23L is secured to an upper end of the stem portion 22L. A mirror is mounted on a rear wall surface of the head portion 23L. A driver of the ultra-lightweight vehicle 10 can look at a situation left rearward of the ultra-lightweight vehicle 10 by the mirror.

The right side mirror member 20R includes a stay portion 21R, a stem portion 22R, and a head portion 23R. The stay portion 21R is secured to a front portion of the right door 17R. The stem portion 22R is an elongated rod member. A lower end of the stem portion 22R is secured to an upper wall surface of the stay portion 21R such that the stem portion 22R extends diagonally rightward, upwardly and outwardly from the upper wall surface of the stay portion 21R. The head portion 23R is secured to an upper end of the stem portion 22R. A mirror is mounted on a rear wall surface of the head portion 23R. A driver of the ultra-lightweight vehicle 10 can look at a situation right rearward of the ultra-lightweight vehicle 10 by the mirror.

When the ultra-lightweight vehicle 10 tips over, the stay portions 21L and 21R form spaces between the body 11 and the ground or the road.

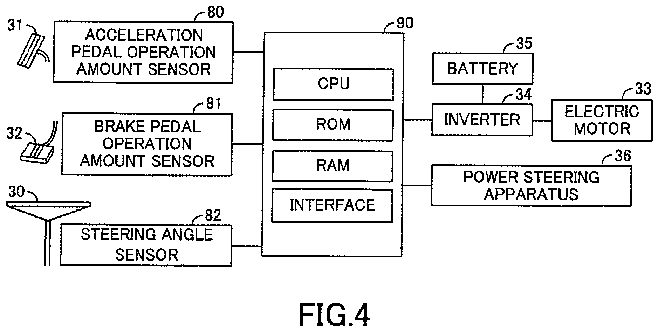

As shown in FIG. 4, the ultra-lightweight vehicle 10 includes a steering wheel 30, an acceleration pedal 31, a brake pedal 32, an electric motor 33, an inverter 34, a battery 35, a power steering apparatus 36, an acceleration pedal operation amount sensor 80, a brake pedal operation amount sensor 81, a steering angle sensor 82, and an ECU 90. The ultra-lightweight vehicle 10 further includes a seat (not shown) for the driver and a seat (not shown) for a passenger of the ultra-lightweight vehicle 10. The seat for the passenger is provided rearward of the seat for the driver.

The ECU 90 is an electronic control unit or an electronic control circuit having as a main component, a microcomputer including a CPU, a ROM, a RAM, an interface, and the like.

The steering wheel 30 is turned by hands of the driver for steering the rear wheel 14 as a steered wheel. The steering angle sensor 82 detects a steering angle of the steering wheel 30 and outputs a signal indicating the detected steering angle to the ECU 90.

The acceleration pedal 31 is operated by a foot of the driver for adjusting an acceleration of the ultra-lightweight vehicle 10. The acceleration pedal operation amount sensor 80 detects an operation amount of the acceleration pedal 31 and outputs a signal indicating the detected operation amount to the ECU 90.

The brake pedal 32 is operated by the foot of the driver for adjusting a deceleration of the ultra-lightweight vehicle 10. The brake pedal operation amount sensor 81 detects an operation amount of the brake pedal 32 and outputs a signal indicating the detected operation amount to the ECU 90.

The inverter 34 is electrically connected to the ECU 90. The electric motor 33 is connected to the battery 35 through the inverter 34. The ultra-lightweight vehicle 10 is driven by rotating the left and right front wheels 13L and 13R, using the electric motor 33 as a driving power source. The electric motor 33 is driven by electric power stored in the battery 35.

### <Outside Air Introduction System>

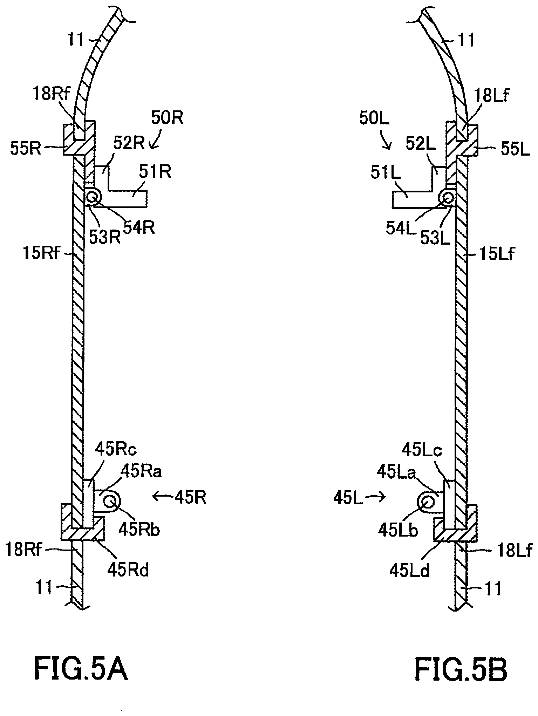

As shown in FIG. 5, the embodiment system includes a left outside air introduction system and a right outside air introduction system. FIG. 5A is a view showing a cross section of a right side part of the body 11 and the like along a vertical plane extending perpendicular to a longitudinal direction of the body 11, viewing from a front side of the body 11, the right side part of the body 11 being a part at a right side of the body 11 in a lateral direction of the body 11. FIG. 5B is a view showing a cross section of a left side part of the body 11 and the like along the vertical plane extending perpendicular to the longitudinal direction of the body 11, viewing from the front side of the body 11, the left side part of the body 11 being a part at a left side of the body 11 in the lateral direction of the body 11.

### <Left Outside Air Introduction System>

As shown in FIG. 5B, the left outside air introduction system includes a support mechanism 45L. The left front window glass 15Lf is supported pivotably outwardly from the body 11 in the lateral direction of the body 11 by the support mechanism 45L.

The support mechanism 45L includes a pair of window glass support rods 45La, a shaft 45Lb, a bracket 45Lc, and a holder member 45Ld. Although not shown, the support mechanism 45L further includes a pair of body support rods and a coil spring.

One of the window glass support rods 45La includes a through hole. The other window glass support rod 45La also includes a through hole. The window glass support rods 45La are secured to an inner lower portion of the left front window glass 15Lf via the bracket 45Lc such that the window glass support rods 45La are spaced apart from each other, and center axes of the through holes of the window glass support rods 45La extend in the longitudinal direction of the body 11 and are aligned with each other. The shaft 45Lb is inserted into the through holes of the window glass support rods 45La.

One of the body support rods of the support mechanism 45L includes a through hole. The other body support rod of the support mechanism 45L also includes a through hole. The body support rods of the support mechanism 45L are secured to the main body 11B such that the body support rods of the support mechanism 45L are spaced apart from each other, and center axes of the through holes of the body support rods of the support mechanism 45L are aligned with the center axes of the through holes of the window glass support rods 45La. The shaft 45Lb is inserted into the through holes of the body support rods of the support mechanism 45L.

The coil spring of the support mechanism 45L is provided around the shaft 45Lb such that the coil spring of the support mechanism 45L abuts against the bracket 45Lc at one end thereof and against the main body 11B at the other end thereof. The coil spring of the support mechanism 45L biases the left front window glass 15Lf via the bracket 45Lc such that the left front window glass 15Lf pivots outwardly from the body 11 in the lateral direction of the body 11, thereby to open.

A bottom end of the left front window glass 15Lf is housed in the holder member 45Ld.

Although not shown, the support mechanism 45L includes a mechanism for limiting a range of the left front window glass 15Lf pivoting outwardly from the body 11.

### <Right Outside Air Introduction System>

As shown in FIG. 5A, the right outside air introduction system includes a support mechanism 45R. The right front window glass 15Rf is supported pivotably outwardly from the body 11 in the lateral direction of the body 11 by the support mechanism 45R.

The support mechanism 45R includes a pair of window glass support rods 45Ra, a shaft 45Rb, a bracket 45Rc, and a holder member 45Rd. Although not shown, the support mechanism 45R further includes a pair of body support rods and a coil spring.

One of the window glass support rods 45Ra includes a through hole. The other window glass support rod 45Ra also includes a through hole. The window glass support rods 45Ra are secured to an inner lower portion of the right front window glass 15Rf via the bracket 45Rc such that the window glass support rods 45Ra are spaced apart from each other, and center axes of the through holes of the window glass support rods 45Ra extend in the longitudinal direction of the body 11 and are aligned with each other. The shaft 45Rb is inserted into the through holes of the window glass support rods 45Ra.

One of the body support rods of the support mechanism 45R includes a through hole. The other body support rod of the support mechanism 45R also includes a through hole. The body support rods of the support mechanism 45R are secured to the main body 11B such that the body support rods of the support mechanism 45R are spaced apart from each other, and center axes of the through holes of the body support rods of the support mechanism 45R are aligned with the center axes of the through holes of the window glass support rods 45Ra. The shaft 45Rb is inserted into the through holes of the body support rods of the support mechanism 45R.

The coil spring of the support mechanism 45R is provided around the shaft 45Rb such that the coil spring of the support mechanism 45R abuts against the bracket 45Rc at one end thereof and against the main body 11B at the other end thereof. The coil spring of the support mechanism 45R biases the right front window glass 15Rf via the bracket 45Rc such that the right front window glass 15Rf pivots outwardly from the body 11 in the lateral direction of the body 11, thereby to open.

A bottom end of the right front window glass 15Rf is housed in the holder member 45Rd.

Although not shown, the support mechanism 45R includes a mechanism for limiting a range of the right front window glass 15Rf pivoting outwardly from the body 11.

### <Window Glass Open/Close Mechanisms>

As shown in FIG. 5B, the left outside air introduction system further includes a window glass open/close mechanism 50L. The window glass open/close mechanism 50L includes an operation lever 51L, a window glass holding plate 52L, a pair of window glass support rods 53L, a shaft 54L, and a stopper 55L.

The stopper 55L is secured to an upper portion of the left front window frame 18Lf, in which the left front window glass 15Lf is fitted. As shown in FIG. 5B, when the left front window glass 15Lf is closed, an upper portion of the left front window glass 15Lf abuts against the stopper 55L.

One of the window glass support rods 53L includes a through hole. The other window glass support rod 53L also includes a through hole. The window glass support rods 53L are secured to an inner upper portion of the left front window glass 15Lf such that the window glass support rods 53L are spaced apart from each other, and center axes of the through holes of the window glass support rods 53L extend generally in the longitudinal direction of the body 11 and are aligned with each other. The shaft 54L is inserted into the through holes of the window glass support rods 53L.

The operation lever 51L includes a through hole at one end thereof. The operation lever 51L is secured to the window glass support rods 53L such that the shaft 54L is inserted into the through hole of the operation lever 51L. The operation lever 51L can pivot about a center axis of the shaft 54L. The window glass open/close mechanism 50L is provided in the ultra-lightweight vehicle 10 such that the operation lever 51L can be operated by the driver of the ultra-lightweight vehicle 10.

The window glass holding plate 52L is secured to the operation lever 51L such that the window glass holding plate 52L extends upwardly from near a portion of the operation lever 51L where the through hole of the operation lever 51L is provided. As shown in FIG. 5B, when the left front window glass 15Lf is closed, the window glass holding plate 52L abuts against or engages one of wall surfaces of the stopper 55L opposite to the other wall surface of the stopper 55L against which the left front window glass 15Lf abuts. Thereby, the left front window glass 15Lf is held at a closed position at which the left front window glass 15Lf is closed. Therefore, the window glass holding plate 52L and the stopper 55L form a holding mechanism for holding the left front window glass 15Lf at the closed position.

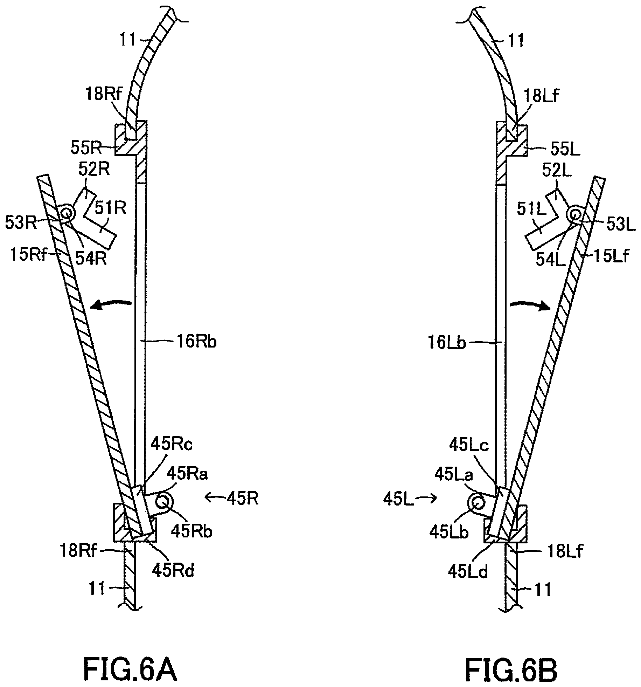

When the driver pivots the operation lever 51L downwardly and outwardly while the left front window glass 15Lf is held at the closed position, the window glass holding plate 52L disengages from the stopper 55L. As shown in FIG. 6B, when the window glass holding plate 52L disengages from the stopper 55L, the left front window glass 15Lf is forcibly pivoted to an open position, at which the left front window glass 15Lf opens, by a biasing force of the coil spring of the support mechanism 45L to the left front window glass 15Lf. Thereby, the outside air is introduced into the interior space 19. It should be noted that FIG. 6B is similar to FIG. 5B.

On the other hand, when the driver pulls the operation lever 51L inwardly and upwardly against the biasing force of the coil spring of 45L while the left front window glass 15Lf is at the open position, the left front window glass 15Lf is pivoted to the closed position. The window glass holding plate 52L is engaged with the stopper 55L by the driver pivoting the operation lever 51L upwardly when the left front window glass 15Lf abuts against the stopper 55L. Thereby, as shown in FIG. 5B, the left front window glass 15Lf is held at the closed position.

As shown in FIG. 5A, the right outside air introduction system further includes a window glass open/close mechanism 50R. Similar to the window glass open/close mechanism 50L, the window glass open/close mechanism 50R includes an operation lever 51R, a window glass holding plate 52R, a pair of window glass support rods 53R, a shaft 54R, and a stopper 55R.

The stopper 55R is secured to an upper portion of the right front window frame 18Rf, in which the right front window glass 15Rf is fitted. As shown in FIG. 5A, when the right front window glass 15Rf is closed, an upper portion of the right front window glass 15Rf abuts against the stopper 55R.

One of the window glass support rods 53R includes a through hole. The other window glass support rod 53R also includes a through hole. The window glass support rods 53R are secured to an inner upper portion of the right front window glass 15Rf such that the window glass support rods 53R are spaced apart from each other, and center axes of the through holes of the window glass support rods 53R extend generally in the longitudinal direction of the body 11 and are aligned with each other. The shaft 54R is inserted into the through holes of the window glass support rods 53R.

The operation lever 51R includes a through hole at one end thereof. The operation lever 51R is secured to the window glass support rods 53R such that the shaft 54R is inserted into the through hole of the operation lever 51R. The operation lever 51R can pivot about a center axis of the shaft 54R. The window glass open/close mechanism 50R is provided in the ultra-lightweight vehicle 10 such that the operation lever 51R can be operated by the driver of the ultra-lightweight vehicle 10.

The window glass holding plate 52R is secured to the operation lever 51R such that the window glass holding plate 52R extends upwardly from near a portion of the operation lever 51R where the through hole of the operation lever 51R is provided. As shown in FIG. 5A, when the right front window glass 15Rf is closed, the window glass holding plate 52R abuts against or engages one of wall surfaces of the stopper 55R opposite to the other wall surface of the stopper 55R against which the right front window glass 15Rf abuts. Thereby, the right front window glass 15Rf is held at a closed position at which the right front window glass 15Rf is closed. Therefore, the window glass holding plate 52R and the stopper 55R form a holding mechanism for holding the right front window glass 15Rf at the closed position.

When the driver pivots the operation lever 51R downwardly and outwardly while the right front window glass 15Rf is held at the closed position, the window glass holding plate 52R disengages from the stopper 55R. As shown in FIG. 6A, when the window glass holding plate 52R disengages from the stopper 55R, the right front window glass 15Rf is forcibly pivoted to an open position, at which the right front window glass 15Rf opens, by a biasing force of the coil spring of the support mechanism 45R to the right front window glass 15Rf. Thereby, the outside air is introduced into the interior space 19. It should be noted that FIG. 6A is similar to FIG. 5A.

On the other hand, when the driver pulls the operation lever 51R inwardly and upwardly against the biasing force of the coil spring of the support mechanism 45R while the right front window glass 15Rf is at the open position, the right front window glass 15Rf is pivoted to the closed position. The window glass holding plate 52R is engaged with the stopper 55R by the driver pivoting the operation lever 51R upwardly when the right front window glass 15Rf abuts against the stopper 55R. Thereby, as shown in FIG. 5A, the right front window glass 15Rf is held at the closed position.

According to the embodiment system, when a temperature of the interior space 19 (hereinafter, will be referred to as "the interior space temperature") increases to a temperature, at which the driver feels discomfort, the driver can open at least one of the left front window glass 15Lf and the right front window glass 15Rf by operating at least one of the operation lever 51L and the operation lever 51R, thereby introducing the outside air into the interior space 19 to decrease the interior space temperature. In addition, when the driver desires to prevent the interior space temperature from increasing excessively, the driver can prevent the interior space temperature from increasing excessively by maintaining at least one of the left front window glass 15Lf and the right front window glass 15Rf at the open position.

Further, when any of the window glasses 15F, 15Lf, 15Rf, 15Lr, and 15Rr clouds, the driver can remove a cloud of the window glass by opening at least one of the left front window glass 15Lf and the right front window glass 15Rf. In addition, when the driver desires to prevent the window glasses 15F, 15Lf, 15Rf, 15Lr, and 15Rr from clouding, the driver can prevent the window glasses 15F, 15Lf, 15Rf, 15Lr, and 15Rr from clouding by maintaining at least one of the left front window glass 15Lf and the right front window glass 15Rf at the open position.

For example, when it starts raining while at least one of the left front window glass 15Lf and the right front window glass 15Rf opens, the driver can prevent the rain from coming into the interior space 19 by operating the operation lever 51L and/or the operation lever 51R to close the left front window glass 15Lf and/or the right front window glass 15Rf.

It should be noted that the present invention is not limited to the aforementioned embodiment and various modifications can be employed within the scope of the present invention.

For example, the support mechanism 45L of the embodiment system may be provided on the left A pillar 16La or the left B pillar 16Lb. When the support mechanism 45L is provided on the left A pillar 16La, the window glass open/close mechanism 50L may be provided at a lower portion of the left front window glass 15Lf in a vertical direction of the body 11 or at a rear portion of the left front window glass 15Lf in the longitudinal direction of the body 11.

Similar to the support mechanism 45L, the support mechanism 45R of the embodiment system may be provided on the right A pillar 16Ra or the right B pillar 16Rb. When the support mechanism 45R is provided on the right A pillar 16Ra, the window glass open/close mechanism 50R may be provided at a lower portion of the right front window glass 15Rf in the vertical direction of the body 11 or at a rear portion of the right front window glass 15Rf in the longitudinal direction of the body 11.

Further, the embodiment system may be configured to pivot the left front window glass 15Lf and the right front window glass 15Rf inwardly of the body 11 in the lateral direction of the body 11.

Further, the embodiment system may be configured to include only one of the left outside air introduction system and the right air introduction system.

Further, the embodiment system may be configured to include a device or a member for biasing the operation lever 51L to pivot the operation lever 51L upwardly. Thereby, the operation lever 51L may be prevented from pivoting downwardly when the window glass holding plate 52L engages with the stopper 55L to hold the left front window glass 15Lf at the closed position. Also, the embodiment system may be configured to include a device or a member for biasing the window glass holding plate 52R to pivot the operation lever 51R upwardly. Thereby, the operation lever 51R may be prevented from pivoting downwardly when the window glass holding plate 52R engages with the stopper 55R to hold the right front window glass 15Rf at the closed position.

Further, the embodiment system may be configured to include a device or a member for opening the left front window glass 15Lf in place of the operation lever 51L. Also, the embodiment system may be configured to include a device or a member for opening the right front window glass 15Rf in place of the operation lever 51R.

Further, the embodiment system may be configured to include a device or a member for holding the left front window glass 15Lf at the closed position in place of the window glass holding plate 52L. Also, the embodiment system may be configured to include a device or a member for holding the right front window glass 15Rf at the closed position in place of the window glass holding plate 52R. The embodiment system may not include the window glass holding plate 52L when the window glass 15Lf can be held by the other member or device. Also, the embodiment system may not include the window glass holding plate 52R when the window glass 15Rf can be held by the other member or device.

Further, the embodiment system may be configured to include a device or a member for biasing the left front window glass 15Lf outwardly in the lateral direction of the body 11 in place of the coil spring. Also, the embodiment system may be configured to include a device or a member for biasing the right front window glass 15Rf outwardly in the lateral direction of the body 11 in place of the coil spring. Further, the coil spring for biasing the left front window glass 15Lf outwardly in the lateral direction of the body 11 may be omitted. Also, the coil spring for biasing the right front window glass 15Rf outwardly in the lateral direction of the body 11 may be omitted.

Further, the operation lever 51L may be provided at any position where a passenger of the ultra-lightweight vehicle 10 other than the driver can operate. Thereby, the passenger can open and close the left front window glass 15Lf. Also, the operation lever 51R may be provided at any position where the passenger of the ultra-lightweight vehicle 10 other than the driver can operate. Thereby, the passenger can open and close the right front window glass 15Rf.

Further, the embodiment system may be used for opening and closing the window glass 15Lr and the window glass 15Rr provided on the left door 17L and the right door 17R, respectively.

## Claims

1. An outside air introduction system for introducing an outside air into a generally closed interior space (19) of an ultra-lightweight vehicle (10), the ultra-lightweight vehicle (10) having a body (11) provided with at least one window frame (18Lf, 18Rf) and at least one window glass (15Lf, 15Rf) fitted in the at least one window frame (18Lf, 18Rf), the body (11) and the at least one window glass (15Lf, 15Rf) defining the generally closed interior space (19), wherein the outside air introduction system comprises :
at least one support mechanism (45L, 45R) for supporting the at least one window glass (15Lf, 15Rf) pivotably on the body (11), and
at least one window glass open/close mechanism (50L, 50R) which is provided to be operated by a driver of the ultra-lightweight vehicle (10) to pivot the at least one window glass (15Lf, 15Rf) to open and close the at least one window glass (15Lf, 15Rf), wherein the at least one window glass open/close mechanism (50L, 50R) includes at least one holding mechanism (52L, 55L, 52R, 55R) for holding the at least one window glass (15Lf, 15Rf) at a closed position in which the at least one window glass (15Lf, 15Rf) is closed, **characterized in that** the at least one holding mechanism (52L, 55L, 52R, 55R) includes at least one operation lever (51L, 51R) operated by the driver operating upwardly to hold the at least one window glass (15Lf, 15Rf) at the closed position and downwardly to release the at least one window glass (15Lf, 15Rf),
**in that** the at least one operation lever (51L, 51R) is secured to window glass support rods (53L, 53R) pivotally via a shaft (54L, 54R) inserted into through holes of the support rods (53L, 53R) and the at least one operation lever (51L, 51R), the window glass support rods (53L, 53R) are secured to an inner upper portion of the at least one window glass (15Lf, 15Rf),
**in that** the at least one holding mechanism (52L, 55L, 52R, 55R) further includes:
at least one stopper (55L, 55R) secured to an upper portion of the at least one window frame (18Lf, 18 Rf), and
at least one window glass holding plate (52L, 52R) secured to the at least one operation lever (51L, 51R), and
**in that**, when the at least one window glass (15Ff, 15Rf) is closed, the at least one window glass (15Lf, 15Rf) abuts against a first wall surface of the at least one stopper (55L, 55R) and the at least one window glass holding plate (52L, 52R) abuts against or engages a second wall surface of the at least one stopper (55L 55R) opposite to the first wall surface, the at least one window glass holding plate (52L, 52R) being configured to be engaged with the at least one stopper (55L, 55R) by the driver pivoting the at least one operation lever (51L, 51R) upwardly when the at least one window glass (15Lf, 15Rf) abuts against the at least one stopper (55L, 55R).

2. The outside air introduction system set forth in claim 1, **characterized in that** the at least one support mechanism (45L, 45R) supports the at least one window glass (15Lf, 15Rf) on the body (11) at a lower portion of the at least one window glass (15Lf, 15Rf).

3. The outside air introduction system set forth in claim 1 or 2, **characterized in that** the at least one support mechanism (45L, 45R) supports the at least one window glass (15Lf, 15Rf) pivotably on the body (11) to pivot the at least one window glass (15Lf, 15Rf) outwardly of the body (11).

4. The outside air introduction system set forth in any of claims 1 to 3, **characterized in that** the at least one window frame (18Lf, 18Rf) is provided on a left or right side portion of the body (11).

5. The outside air introduction system set forth in claim 1, **characterized in that** the at least one window frame (18Lf, 18Rf) includes a left window frame (18Lf) provided on a left side portion of the body (11) and a right window frame (18Rf) provided on a right side portion of the body (11),
the at least one window glass (15Lf, 15Rf) includes a left window glass (15Lf) fitted to the left window frame (18Lf) and a right window glass (15Rf) fitted to the right window frame (18Rf), and
the at least one support mechanism (45L, 45R) includes a left support mechanism (45L) for supporting the left window glass (15Lf) pivotably on the body (11) and a right support mechanism (45R) for supporting the right window glass (15Rf) pivotably on the body (11),
**in that** the outside air introduction system comprises a left window glass open/close mechanism (50L) which is provided to be operated by a driver of the ultra-lightweight vehicle (10) to pivot the left window glass (15Lf) to open and close the left window glass (15Lf) and a right window glass open/close mechanism (50R) which is provided to be operated by the driver of the ultra-lightweight vehicle (10) to pivot the right window glass (15Rf) to open and close the right window glass (15Rf),
**in that** the left window glass open/close mechanism (50L) includes a left holding mechanism (52L, 55L) for holding the left window glass (15Lf) at a closed position in which the left window glass (15Lf) is closed,
**in that** the right window glass open/close mechanism (50R) includes a right holding mechanism (52R, 55R) for holding the right window glass (15Rf) at a closed position in which the right window glass (15Rf) is closed,
**in that** the left holding mechanism (52L, 55L) includes a left operation lever (51L) operated by the driver operating upwardly to hold the left window glass (15Lf) at the closed position and downwardly to release the left window glass (15Lf), and
**in that** the right holding mechanism (52R, 55R) includes a right operation lever (51R) operated by the driver operating upwardly to hold the right window glass (15Rf) at the closed position and downwardly to release the right window glass (15Rf),
**in that** the left operation lever (51L) is secured to window glass support rods (53L) pivotally via a shaft (54L) inserted into through holes of the support rods (53L) and the operation lever (51L), the window glass support rods (53L) are secured to an inner upper portion of the left window glass (15Lf),
**in that** the right operation lever (51R) is secured to window glass support rods (53R) pivotally via a shaft (54R) inserted into through holes of the support rods (53R) and the operation lever (51R), the window glass support rods (53R) are secured to an inner upper portion of the right window glass (15Rf),
**in that** the left holding mechanism (52L, 55L) further includes:
a left stopper (55L) secured to an upper portion of the left window frame (18Lf), and
a left window glass holding plate (52L) secured to the left operation lever (51L),
**in that** the right holding mechanism (52R, 55R) further includes:
a right stopper (55R) secured to an upper portion of the right window frame (18Rf), and
a right window glass holding plate (52R) secured to the right operation lever (51R),
**in that**, when the left window glass (15Ff) is closed, the left window glass (15Lf) abuts against a first wall surface of the left stopper (55L) and the left window glass holding plate (52L) abuts against or engages a second wall surface of the left stopper (55L) opposite to the first wall surface, the left window glass holding plate (52L) being configured to be engaged with the left stopper (55L) by the driver pivoting the left operation lever (51L) upwardly when the left window glass (15Lf) abuts against the left stopper (55L), and
**in that**, when the right window glass (15Rf) is closed, the right window glass (15Tf) abuts against a first wall surface of the right stopper (55R) and the right window glass holding plate (52R) abuts against or engages a second wall surface of the right stopper (55R) opposite to the first wall surface, the right window glass holding plate (52R) being configured to be engaged with the right stopper (55R) by the driver pivoting the right operation lever (51R) upwardly when the right window glass (15Rf) abuts against the right stopper (55R).

6. The outside air introduction system set forth in claim 5, **characterized in that** the left support mechanism (45L) supports the left window glass (15Lf) on the body (11) at a lower portion of the left window glass (15Lf),
the right support mechanism (45R) supports the right window glass (15Rf) on the body (11) at a lower portion of the right window glass (15Rf).

7. The outside air introduction system set forth in 5 or 6, **characterized in that** the left support mechanism (45L) supports the left window glass (15Lf) pivotably on the body (11) to pivot the left window glass (15Lf) outwardly of the body (11), and
the right support mechanism (45R) supports the right window glass (15Rf) pivotably on the body (11) to pivot the right window glass (15Rf) outwardly of the body (11).

## Patentansprüche

1. Außenlufteinführsystem zum Einführen von Außenluft in einen allgemein geschlossenen Innenraum (19) eines ultraleichten Fahrzeugs (10), wobei das ultraleichte Fahrzeug (10) eine Karosserie (11) aufweist, die mit mindestens einem Fensterrahmen (18Lf, 18Rf) und mindestens einer Fensterscheibe (15Lf, 15Rf) versehen ist, die in den mindestens einen Fensterrahmen (18Lf, 18Rf) eingesetzt ist, wobei die Karosserie (11) und die mindestens eine Fensterscheibe (15Lf, 15Rf) den allgemein geschlossenen Innenraum (19) definieren,
wobei das Außenlufteinführsystem umfasst:
mindestens einen Stützmechanismus (45L, 45R) zum schwenkbaren Abstützen der mindestens einen Fensterscheibe (15Lf, 15Rf) n der Karosserie (11) und
mindestens ein Fensterscheiben-Öffnungs-Schließmechanismus (50L, 50R), der dazu vorgesehen ist, von einem Fahrer des ultraleichten Fahrzeugs (10) betätigt zu werden, um die mindestens eine Fensterscheibe (15Lf, 15Rf) zu schwenken, um die mindestens eine Fensterscheibe (15Lf, 15Rf) zu öffnen und zu schließen,
wobei der mindestens eine Fensterscheiben-Öffnungs-Schließmechanismus (50L, 50R) mindestens einen Haltemechanismus (52L, 55L, 52R, 55R) zum Halten der mindestens einen Fensterscheibe (15Lf, 15Rf) in einer geschlossenen Position, in der die mindestens eine Fensterscheibe (15Lf, 15Rf) geschlossen ist, umfasst,
**dadurch gekennzeichnet,**
**dass** der mindestens eine Haltemechanismus (52L, 55L, 52R, 55R) mindestens einen vom Fahrer betätigten Betätigungshebel (51L, 51R) aufweist, der nach oben wirkt, um die mindestens eine Fensterscheibe (15Lf, 15Rf) in der geschlossenen Position zu halten, und nach unten wirkt, um die mindestens eine Fensterscheibe (15Lf, 15Rf) freizugeben,
**dass** der mindestens eine Betätigungshebel (51L, 51R) an Fensterscheiben-Tragstangen (53L, 53R) über eine Welle (54L, 54R), die in Durchgangsöffnungen der Tragstangen (53L, 53R) und des wenigstens einen Betätigungshebels (51L, 51R) eingesetzt ist, schwenkbar befestigt ist, wobei die Fensterscheiben-Tragstangen (53L, 53R) an einem inneren oberen Abschnitt der mindestens einen Fensterscheibe (15Lf, 15Rf) befestigt sind,
**dass** der mindestens eine Haltemechanismus (52L, 55L, 52R, 55R) ferner umfasst:
mindestens einen Anschlag (55L, 55R), der an einem oberen Abschnitt des mindestens einen Fensterrahmens (18Lf, 18 Rf) befestigt ist, und
mindestens eine Fensterscheibenhalteplatte (52L, 52R), die an dem mindestens einen Betätigungshebel (51L, 51R) befestigt ist, und
**dass**, wenn die mindestens eine Fensterscheibe (15Ff, 15Rf) geschlossen ist, die mindestens eine Fensterscheibe (15Lf, 15Rf) an einer ersten Wandfläche des mindestens einen Anschlags (55L, 55R) anliegt und die mindestens eine Fensterscheibenhalteplatte (52L, 52R) an einer der ersten Wandfläche gegenüberliegenden zweiten Wandfläche des mindestens einen Anschlags (55L 55R) anliegt oder angreift, wobei die mindestens eine Fensterscheibenhalteplatte (52L, 52R) so konfiguriert ist, dass sie mit dem mindestens einen Anschlag (55L, 55R) in Eingriff gebracht wird, indem der Fahrer den mindestens einen Betätigungshebel (51L, 51R) nach oben schwenkt, wenn die mindestens eine Fensterscheibe (15Lf, 15Rf) gegen den mindestens einen Anschlag (55L, 55R) stößt.

2. Außenlufteinführsystem nach Anspruch 1, **dadurch gekennzeichnet, dass** der mindestens eine Stützmechanismus (45L, 45R) die mindestens eine Fensterscheibe (15Lf, 15Rf) an der Karosserie (11) an einem unteren Abschnitt der mindestens einen Fensterscheibe (15Lf, 15Rf) abstützt.

3. Außenlufteinführsystem nach Anspruch 1 oder 2, **dadurch gekennzeichnet, dass** der mindestens eine Stützmechanismus (45L, 45R) die mindestens eine Fensterscheibe (15Lf, 15Rf) schwenkbar an der Karosserie (11) abstützt, um die mindestens eine Fensterscheibe (15Lf, 15Rf) von der Karosserie (11) nach außen zu schwenken.

4. Außenlufteinführsystem nach einem der Ansprüche 1 bis 3, **dadurch gekennzeichnet, dass** der mindestens eine Fensterrahmen (18Lf, 18Rf) an einem linken oder rechten Seitenteil der Karosserie (11) vorgesehen ist.

5. Außenlufteinführsystem nach Anspruch 1, **dadurch gekennzeichnet,**
**dass** der mindestens eine Fensterrahmen (18Lf, 18Rf) einen linken Fensterrahmen (18Lf), der an einem linken Seitenteil der Karosserie (11) vorgesehen ist, und einen rechten Fensterrahmen (18Rf), der an einem rechten Seitenteil der Karosserie (11) vorgesehen ist, umfasst,
**dass** die mindestens eine Fensterscheibe (15Lf, 15Rf) eine linke Fensterscheibe (15Lf), die an dem linken Fensterrahmen (18Lf) angebracht ist, und eine rechte Fensterscheibe (15Rf), die an dem rechten Fensterrahmen (18Rf) angebracht ist, umfasst, und
**dass** der mindestens eine Stützmechanismus (45L, 45R) einen linken Stützmechanismus (45L) zum schwenkbaren Abstützen der linken Fensterscheibe (15Lf) an der Karosserie (11) und einen rechten Stützmechanismus (45R) zum schwenkbaren Abstützen der rechten Fensterscheibe (15Rf) an der Karosserie (11) umfasst,
**dass** das Außenlufteinführsystem einen linken Fensterscheiben-Öffnungs-Schließmechanismus (50L), der vorgesehen ist, um von einem Fahrer des ultraleichten Fahrzeugs (10) betätigt zu werden, um die linke Fensterscheibe (15Lf) zu schwenken, um die linke Fensterscheibe (15Lf) zu öffnen und zu schließen, und einen rechten Fensterscheiben-Öffnungs-Schließmechanismus (50R) umfasst, der vorgesehen ist, um von dem Fahrer des ultraleichten Fahrzeugs (10) betätigt zu werden, um die rechte Fensterscheibe (15Rf) zu schwenken, um die rechte Fensterscheibe (15Rf) zu öffnen und zu schließen,
**dass** der linke Fensterscheiben-Öffnungs-Schließmechanismus (50L) einen linken Haltemechanismus (52L, 55L) zum Halten der linken Fensterscheibe (15Lf) in einer geschlossenen Position, in der die linke Fensterscheibe (15Lf) geschlossen ist, umfasst,
**dass** der rechte Fensterscheiben-Öffnungs-Schließmechanismus (50R) einen rechten Haltemechanismus (52R, 55R) zum Halten der rechten Fensterscheibe (15Rf) in einer geschlossenen Position, in der die rechte Fensterscheibe (15Rf) geschlossen ist, umfasst,
**dass** der linke Haltemechanismus (52L, 55L) einen linken Betätigungshebel (51L) umfasst, der vom Fahrer nach oben, um die linke Fensterscheibe (15Lf) in der geschlossenen Position zu halten, und nach unten betätigt wird, um die linke Fensterscheibe (15Lf) freizugeben, und
**dass** der rechte Haltemechanismus (52R, 55R) einen rechten Betätigungshebel (51R) umfasst, der vom Fahrer nach oben, um die rechte Fensterscheibe (15Rf) in der geschlossenen Position zu halten, und nach unten betätigt wird, um die rechte Fensterscheibe (15Rf) freizugeben,
**dass** der linke Betätigungshebel (51L) an Fensterscheiben-Tragstangen (53L) über eine Welle (54L), die in Durchgangsöffnungen der Tragstangen (53L) und des Betätigungshebels (51L) eingesetzt ist, schwenkbar befestigt ist, wobei die Fensterscheiben-Tragstangen (53L) an einem inneren oberen Abschnitt der linken Fensterscheibe (15Lf) befestigt sind,
**dass** der rechte Betätigungshebel (51R) an Fensterscheiben-Tragstangen (53R) über eine Welle (54R), die in Durchgangsöffnungen der Tragstangen (53R) und des Betätigungshebels (51R) eingesetzt ist, schwenkbar befestigt ist, wobei die Fensterscheiben-Tragstangen (53R) an einem inneren oberen Abschnitt der rechten Fensterscheibe (15Lf) befestigt sind,
**dass** der linke Haltemechanismus (52L, 55L) ferner umfasst:
einen linken Anschlag (55L), der an einem oberen Teil des linken Fensterrahmens (18Lf) befestigt ist, und
eine linke Fensterscheibenhalteplatte (52L), die am linken Betätigungshebel (51L) befestigt ist,
**dass** der rechte Haltemechanismus (52R, 55R) ferner umfasst:
einen rechten Anschlag (55R), der an einem oberen Teil des rechten Fensterrahmens (18Rf) befestigt ist, und
eine rechte Fensterscheibenhalteplatte (52R), die am rechten Betätigungshebel (51R) befestigt ist,
**dass**, wenn die linke Fensterscheibe (15Ff) geschlossen ist, die linke Fensterscheibe (15Lf) an einer ersten Wandfläche des linken Anschlags (55L) anliegt und die linke Fensterscheibenhalteplatte (52L) an einer zweiten Wandfläche des linken Anschlags (55L), die der ersten Wandfläche gegenüberliegt, anliegt oder an dieser angreift, wobei die linke Fensterscheibenhalteplatte (52L) so konfiguriert ist, dass sie mit dem linken Anschlag (55L) in Eingriff gebracht wird, in dem der Fahrer den linken Betätigungshebel (51L) nach oben schwenkt, wenn die linke Fensterscheibe (15Lf) gegen den linken Anschlag (55L) stößt, und
**dass**, wenn die rechte Fensterscheibe (15Rf) geschlossen ist, die rechte Fensterscheibe (15Tf) an einer ersten Wandfläche des rechten Anschlags (55R) anliegt und die rechte Fensterscheibenhalteplatte (52R) an einer zweiten Wandfläche des rechten Anschlags (55R), die der ersten Wandfläche gegenüberliegt, anliegt oder an dieser angreift, wobei die rechte Fensterscheibenhalteplatte (52R) so konfiguriert ist, dass sie mit dem rechten Anschlag (55R) in Eingriff gebracht wird, in dem der Fahrer den rechten Betätigungshebel (51R) nach oben schwenkt, wenn die rechte Fensterscheibe (15Rf) gegen den rechten Anschlag (55R) stößt.

6. Außenlufteinführsystem nach Anspruch 5, **dadurch gekennzeichnet, dass**
der linke Stützmechanismus (45L) die linke Fensterscheibe (15Lf) an der Karosserie (11) an einem unteren Abschnitt der linken Fensterscheibe (15Lf) stützt,
der rechte Stützmechanismus (45R) die rechte Fensterscheibe (15Rf) an der Karosserie (11) an einem unteren Teil der rechten Fensterscheibe (15Rf) abstützt.

7. Außenlufteinführsystem nach Anspruch 5 oder 6, **dadurch gekennzeichnet, dass**
der linke Stützmechanismus (45L) die linke Fensterscheibe (15Lf) schwenkbar an der Karosserie (11) abstützt, um die linke Fensterscheibe (15Lf) von der Karosserie (11) nach außen zu schwenken, und
der rechte Stützmechanismus (45R) die rechte Fensterscheibe (15Rf) schwenkbar an der Karosserie (11) abstützt, um die rechte Fensterscheibe (15Rf) von der Karosserie (11) nach außen zu schwenken.

## Revendications

1. Système d'introduction d'air extérieur pour introduire un air extérieur dans un espace intérieur globalement fermé (19) d'un véhicule ultra-léger (10), le véhicule ultra-léger (10) ayant une carrosserie (11) pourvu d'au moins un cadre de fenêtre (18Lf, 18Rf) et d'au moins une vitre (15Lf, 15Rf) montée dans le au moins un cadre de fenêtre (18Lf, 18Rf), la carrosserie (11) et la au moins une vitre (15Lf, 15Rf) définissant l'espace intérieur globalement fermé (19),
dans lequel le système d'introduction d'air extérieur comprend :
au moins un mécanisme de support (45L, 45R) pour supporter de façon pivotante la au moins une vitre (15Lf, 15Rf) sur la carrosserie (11), et
au moins un mécanisme d'ouverture/fermeture de vitre (50L, 50R) qui est prévu pour être actionné par un conducteur du véhicule ultra-léger (10) pour faire pivoter la au moins une vitre (15Lf, 15Rf) pour ouvrir et fermer la au moins une vitre (15Lf, 15Rf),
dans lequel le au moins un mécanisme d'ouverture/fermeture de vitre (50L, 50R) comprend au moins un mécanisme de maintien (52L, 55L, 52R, 55R) pour maintenir la au moins une vitre (15Lf, 15Rf) dans une position fermée dans laquelle la au moins une vitre (15Lf, 15Rf) est fermée,
**caractérisé en ce que** le au moins un mécanisme de maintien (52L, 55L, 52R, 55R) comprend au moins un levier d'actionnement (51L, 51R) actionné par le conducteur agissant vers le haut pour maintenir la au moins une vitre (15Lf, 15Rf) dans la position fermée et vers le bas pour libérer la au moins une vitre (15Lf, 15Rf),
**en ce que** le au moins un levier d'actionnement (51L, 51R) est fixé de façon pivotante sur des tiges de support de vitre (53L, 53R) par l'intermédiaire d'un arbre (54L, 54R) inséré dans des trous débouchants des tiges de support (53L, 53R) et du au moins un levier d'actionnement (51L, 51R), les tiges de support de vitre (53L, 53R) sont fixées sur une partie supérieure intérieure de la au moins une vitre (15Lf, 15Rf),
**en ce que** le au moins un mécanisme de maintien (52L, 55L, 52R, 55R) comprend en outre :
au moins une butée (55L, 55R) fixée sur une partie supérieure du au moins un cadre de fenêtre (18Lf, 18Rf), et
au moins une plaque de maintien de vitre (52L, 52R) fixée sur le au moins un levier d'actionnement (51L, 51R), et
**en ce que**, quand la au moins une vitre (15Lf, 15Rf) est fermée, la au moins une vitre (15Lf, 15Rf) bute contre une première surface de paroi de la au moins une butée (55L, 55R) et la au moins une plaque de maintien de vitre (52L, 52R) bute contre ou engage une deuxième surface de paroi de la au moins une butée (55L 55R) opposée à la première surface de paroi, la au moins une plaque de maintien de vitre (52L, 52R) étant configurée pour être engagée avec la au moins une butée (55L, 55R) par le conducteur qui fait pivoter le au moins un levier d'actionnement (51L, 51R) vers le haut quand la au moins une vitre (15Lf, 15Rf) bute contre la au moins une butée (55L, 55R).

2. Système d'introduction d'air extérieur selon la revendication 1, **caractérisé en ce que** le au moins un mécanisme de support (45L, 45R) supporte la au moins une vitre (15Lf, 15Rf) sur la carrosserie (11) au niveau d'une partie inférieure de la au moins une vitre (15Lf, 15Rf).

3. Système d'introduction d'air extérieur selon la revendication 1 ou 2, **caractérisé en ce que** le au moins un mécanisme de support (45L, 45R) supporte de façon pivotante la au moins une vitre (15Lf, 15Rf) sur la carrosserie (11) pour faire pivoter la au moins une vitre (15Lf, 15Rf) à l'extérieur de la carrosserie (11).

4. Système d'introduction d'air extérieur selon l'une quelconque des revendications 1 à 3, **caractérisé en ce que** le au moins un cadre de fenêtre (18Lf, 18Rf) est prévu sur une partie latérale gauche ou droite de la carrosserie (11).

5. Système d'introduction d'air extérieur selon la revendication 1, **caractérisé en ce que** le au moins un cadre de fenêtre (18Lf, 18Rf) comprend un cadre de fenêtre gauche (18Lf) prévu sur une partie latérale gauche de la carrosserie (11) et un cadre de fenêtre droit (18Rf) prévu sur une partie latérale droite de la carrosserie (11),
la au moins une vitre (15Lf, 15Rf) comprend une vitre gauche (15Lf) montée sur le cadre de fenêtre gauche (18Lf) et une vitre droite (15Rf) montée sur le cadre de fenêtre droit (18Rf), et
le au moins un mécanisme de support (45L, 45R) comprend un mécanisme de support gauche (45L) pour supporter de façon pivotante la vitre gauche (15Lf) sur la carrosserie (11) et un mécanisme de support droit (45R) pour supporter de façon pivotante la vitre droite (15Rf) sur la carrosserie (11),
**en ce que** le système d'introduction d'air extérieur comporte un mécanisme d'ouverture/fermeture de vitre gauche (50L) qui est prévu pour être actionné par un conducteur du véhicule ultra-léger (10) pour faire pivoter la vitre gauche (15Lf) pour ouvrir et fermer la vitre gauche (15Lf) et un mécanisme d'ouverture/fermeture de vitre droite (50R) qui est prévu pour être actionné par le conducteur du véhicule ultra-léger (10) pour faire pivoter la vitre droite (15Rf) pour ouvrir et fermer la vitre droite (15Rf),
**en ce que** le mécanisme d'ouverture/fermeture de vitre gauche (50L) comprend un mécanisme de maintien gauche (52L, 55L) pour maintenir la vitre gauche (15Lf) dans une position fermée dans laquelle la vitre gauche (15Lf) est fermée,
**en ce que** le mécanisme d'ouverture/fermeture de vitre droite (50R) comprend un mécanisme de maintien droit (52R, 55R) pour maintenir la vitre droite (15Rf) dans une position fermée dans laquelle la vitre droite (15Rf) est fermée,
**en ce que** le mécanisme de maintien gauche (52L, 55L) comprend un levier d'actionnement gauche (51L) actionné par le conducteur agissant vers le haut pour maintenir la vitre gauche (15Lf) dans la position fermée et vers le bas pour libérer la vitre gauche (15Lf), et
**en ce que** le mécanisme de maintien droit (52R, 55R) comprend un levier d'actionnement droit (51R) actionné par le conducteur agissant vers le haut pour maintenir la vitre droite (15Rf) dans la position fermée et vers le bas pour libérer la vitre droite (15Rf),
**en ce que** le levier d'actionnement gauche (51L) est fixé de façon pivotante sur des tiges de support de vitre (53L) par l'intermédiaire d'un arbre (54L) inséré dans des trous débouchants des tiges de support (53L) et du levier d'actionnement (51L), les tiges de support de vitre (53L) sont fixées sur une partie supérieure intérieure de la vitre gauche (15Lf),
**en ce que** le levier d'actionnement droit (51R) est fixé de façon pivotante sur des tiges de support de vitre (53R) par l'intermédiaire d'un arbre (54R) inséré dans des trous débouchants des tiges de support (53R) et du levier d'actionnement (51R), les tiges de support de vitre (53R) sont fixées sur une partie supérieure intérieure de la vitre droite (15Rf),
**en ce que** le mécanisme de maintien gauche (52L, 55L) comprend en outre :
une butée gauche (55L) fixée sur une partie supérieure du cadre de fenêtre gauche (18Lf), et
une plaque de maintien de vitre gauche (52L) fixée sur le levier d'actionnement gauche (51L),
**en ce que** le mécanisme de maintien droit (52R, 55R) comprend en outre :
une butée droite (55R) fixée sur une partie supérieure du cadre de fenêtre droit (18Rf), et
une plaque de maintien de vitre droite (52R) fixée sur le levier d'actionnement droit (51R),
**en ce que**, quand la vitre gauche (15Ff) est fermée, la vitre gauche (15Lf) bute contre une première surface de paroi de la butée gauche (55L) et la plaque de maintien de vitre gauche (52L) bute contre ou engage une deuxième surface de paroi de la butée gauche (55L) opposée à la première surface de paroi, la plaque de maintien de vitre gauche (52L) étant configurée pour être engagée avec la butée gauche (55L) par le conducteur qui fait pivoter le levier d'actionnement gauche (51L) vers le haut quand la vitre gauche (15Lf) bute contre la butée gauche (55L), et
**en ce que**, quand la vitre droite (15Rf) est fermée, la vitre droite (15Tf) bute contre une première surface de paroi de la butée droit (55R) et la plaque de maintien de vitre droite (52R) bute contre ou engage une deuxième surface de paroi de la butée droite (55R) opposée à la première surface de paroi, la plaque de maintien de vitre droite (52R) étant configurée pour être engagée avec la butée droite (55R) par le conducteur qui fait pivoter le levier d'actionnement droit (51R) vers le haut quand la vitre droite (15Rf) bute contre la butée droite (55R).

6. Système d'introduction d'air extérieur selon la revendication 5, **caractérisé en ce que** le mécanisme de support gauche (45L) supporte la vitre gauche (15Lf) sur la carrosserie (11) au niveau d'une partie inférieure de la vitre gauche (15Lf),
le mécanisme de support droit (45R) supporte la vitre droite (15Rf) sur la carrosserie (11) au niveau d'une partie inférieure de la vitre droite (15Rf).

7. Système d'introduction d'air extérieur selon la revendication 5 ou 6, **caractérisé en ce que** le mécanisme de support gauche (45L) supporte de façon pivotante la vitre gauche (15Lf) sur la carrosserie (11) pour faire pivoter la vitre gauche (15Lf) à l'extérieur de la carrosserie (11), et
le mécanisme de support droit (45R) supporte la vitre droite (15Rf) de façon pivotante sur la carrosserie (11) pour faire pivoter la vitre droite (15Rf) à l'extérieur de la carrosserie (11).
